## Europäisches Patentamt
## European Patent Office
## Office européen des brevets

(11) Veröffentlichungsnummer: **0 118 608**

**A1**

(12) **EUROPÄISCHE PATENTANMELDUNG**

(21) Anmeldenummer: **83112152.0**

(22) Anmeldetag: **02.12.83**

(51) Int. Cl.³: **B 60 G 17/04**
**B 60 G 5/02**

(30) Priorität: **10.03.83 DE 3308557**

(43) Veröffentlichungstag der Anmeldung:
**19.09.84 Patentblatt 84/38**

(84) Benannte Vertragsstaaten:
**BE DE FR GB**

(71) Anmelder: **Krupp Polysius AG**
**Graf-Galen-Strasse 17**
**D-4720 Beckum(DE)**

(72) Erfinder: **Gnoss, Bernd, Dipl.-Ing.**
**Erlengrund 4**
**D-4722 Ennigerloh(DE)**

(74) Vertreter: **Tetzner, Volkmar, Dr.-Ing. Dr. Jur.**
**Van-Gogh-Strasse 3**
**D-8000 München 71(DE)**

(54) Fahrgestell für schwere Arbeitsgeräte.

㊼ Ein Fahrgestell (1) für schwere Arbeitsgeräte, z.B. Schütt-gut-Bandabsetzer, Schüttgut-Rücklader usw., enthält an mehreren Stützpunkten (3) seines Gestellrahmens (2) Laufrä-der (4), die über Laufradschwingen (5, 5a, 5b) schwenkbe-weglich mit dem Gestellrahmen verbunden sind. Damit im Bereich jedes Stützpunktes (3) bei beliebiger Anzahl von Laufrädern (4) eine gleichbleibende, relativ niedrige Bau-höhe (H) eingehalten werden kann, wird die Verbindung zwischen dem Gestellrahmen (2) und jeder Laufradschwinge (5, 5a, 5b) durch eine hydraulisch beaufschlagbare Hubvor-richtung (6) hergestellt.

./...

EP 0 118 608 A1

FIG.1

## Fahrgestell für schwere Arbeitsgeräte

Die Erfindung betrifft ein Fahrgestell für schwere Arbeitsgeräte, enthaltend einen Gestellrahmen und an mehreren Stützpunkten des Gestellrahmens angeordnete Laufräder, die über Laufradschwingen mit dem Gestellrahmen schwenkbeweglich verbunden sind.

Es ist allgemein bekannt, daß schwere Arbeitsgeräte, wie z.B. Beladeeinrichtungen von großen Lagerplätzen, Schüttgut-Bandabsetzer und Schüttgut-Rücklader bei großen Schüttgut-Lagerplätzen, von einem Fahrgestell abgestützt und mit diesem an einem Arbeitsplatz entlang verfahren werden können, was insbesondere auf entsprechend verlegten Schienen erfolgt. Aufgrund des hohen Gewichtes solcher Arbeitsgeräte stützt sich das Fahrgestell über seinen Gestellrahmen an mehreren Stützpunkten jeweils über eine Anzahl von Laufrädern ab, wobei je nach dem Gesamtgewicht und der Anzahl der Stützpunkte wenigstens zwei, vorzugsweise jedoch mehr als zwei Laufräder je Stützpunkt vorgesehen werden.

Bei aus der Praxis bekannten Fahrgestellen der genannten Art sind die Laufräder in verschiedenen Kombinationen in mehreren Laufradschwingen angeordnet und über diese Schwingen mit dem Gestellrahmen schwenkbeweglich verbunden. Da hierbei im Bereich jedes Gestellrahmen-Stützpunktes meist mehrere Laufradschwingen vorgesehen und diese Laufradschwingen durch Oberschwingen wiederum gelenkig miteinander verbunden sind, ergibt sich vor allem bei größeren

0118608

Arbeitsgeräten, die Fahrgestelle mit einer entsprechend großen Anzahl von Laufrädern besitzen, eine erhebliche Bauhöhe des Fahrgestelles, wobei mit zunehmender Bauhöhe der einzelnen Schwingenanordnungen eines Stützpunktes die Quersteifigkeit des Fahrgestelles deutlich abnimmt. Außerdem sind hierfür aufwendige Schwenkgelenke erforderlich, bei denen die gesamte Last eines Stützpunktes vom obersten Gelenk in einer solchen Schwingenanordnung aufgenommen werden muß.

Der Erfindung liegt daher die Aufgabe zugrunde, ein Fahrgestell der eingangs genannten Art zu schaffen, das sich bei beliebig großer Anzahl von Laufrädern durch eine äußerst niedrige Bauhöhe im Bereich jedes Fahrgestell-Stützpunktes sowie durch einen deutlich herabgesetzten Bauaufwand - bei ausreichend großer Stabilität - auszeichnet.

Diese Aufgabe wird erfindungsgemäß dadurch gelöst, daß die Verbindung zwischen dem Gestellrahmen und jeder Laufradschwinge durch eine hydraulisch beaufschlagbare, einstellbare Hubvorrichtung gebildet wird.

Die Erfindung macht sich den hydromechanischen Grundsatz zunutze, nach dem in einem System gleichen Druckes auf gleich große Flächen auch gleich große Druckkräfte wirken. Während bei den oben geschilderten bekannten Ausführungen die Laufradschwingen jedes Gestellrahmen-Stützpunktes noch durch übergeordnete Oberschwingen gelenkig miteinander verbunden sind, kann bei dem erfindungsgemäßen Fahrgestell jede Laufradschwinge für sich über die hydraulische Hubvorrichtung direkt am Gestellrahmen befestigt sein. Bei dieser Anordnung spielt die Anzahl der Laufräder für das Fahrgestell bzw. eines Gestellrahmen-Stützpunktes keine Rolle, sondern es können im Bereich jedes Stützpunktes beliebig viele Laufräder bei einer äußerst geringen Bauhöhe vorgesehen werden. Des weiteren brauchen bei der erfindungsgemäßen Ausführungsform nur noch verhältnismäßig wenig Schwenkgelenke für die Halterung der Laufradschwingen vorgesehen zu werden. Diese niedrige Bauhöhe und die reduzierte Anzahl der Schwenkgelenke bringen eine im Vergleich zu bekannten Ausführungen deutlich erhöhte Quersteifigkeit und Führungsgenauigkeit mit sich, was sich wiederum in einer relativ einfachen und leichten Bauweise niederschlägt, ohne daß dadurch die Stabilität der Konstruktion an sich geschwächt wird. Wichtig ist bei dieser erfindungsgemäßen Ausführungsform aber noch, daß die hydraulisch beaufschlagbare Hubvorrichtung jeder Laufradschwinge einstellbar ist, wodurch sich in der Praxis eine im Vergleich zu bekannten Ausführungen erheblich gleichmäßigere Radlastverteilung an jedem Gestellrahmen-Stützpunkt erzielen läßt.

Weitere Einzelheiten und Vorzüge der Erfindung sind Gegenstand der Unteransprüche und werden im folgenden anhand zweier in der Zeichnung veranschaulichter Ausführungsbeispiele näher erläutert. Es zeigen

Fig.1    eine weitgehend schematisch gehaltene Teilansicht des Fahrgestelles im Bereich eines Stützpunktes, bei paarweise in Schwingen angeordneten Laufrädern;

Fig.2    eine ähnliche schematische Teilansicht wie Fig.1, zur Erläuterung eines zweiten Ausführungsbeispieles, bei dem drei Laufräder in zwei gelenkig miteinander verbundenen Laufradschwingen angeordnet sind.

Es sei zunächst angenommen, daß das Fahrgestell bei der in der Zeichnung veranschaulichter Ausführungsbeispiele zur fahrbaren Abstützung eines Schüttgut-Bandabsetzers oder eines Schüttgut-Rückladers bestimmt ist, der das schwere Arbeitsgerät bildet und entlang der Schüttgut-Lagerfläche verfahren werden kann. Der grundsätzliche Aufbau eines solchen Arbeitsgerätes kann als allgemein bekannt vorausgesetzt werden. Da es hier ferner insbesondere um die fahrbare Abstützung des Fahrgestelles für ein solches Arbeitsgerät geht, beschränkt sich die folgende Beschreibung auch nur auf die dafür unbedingt erforderlichen Merkmale.

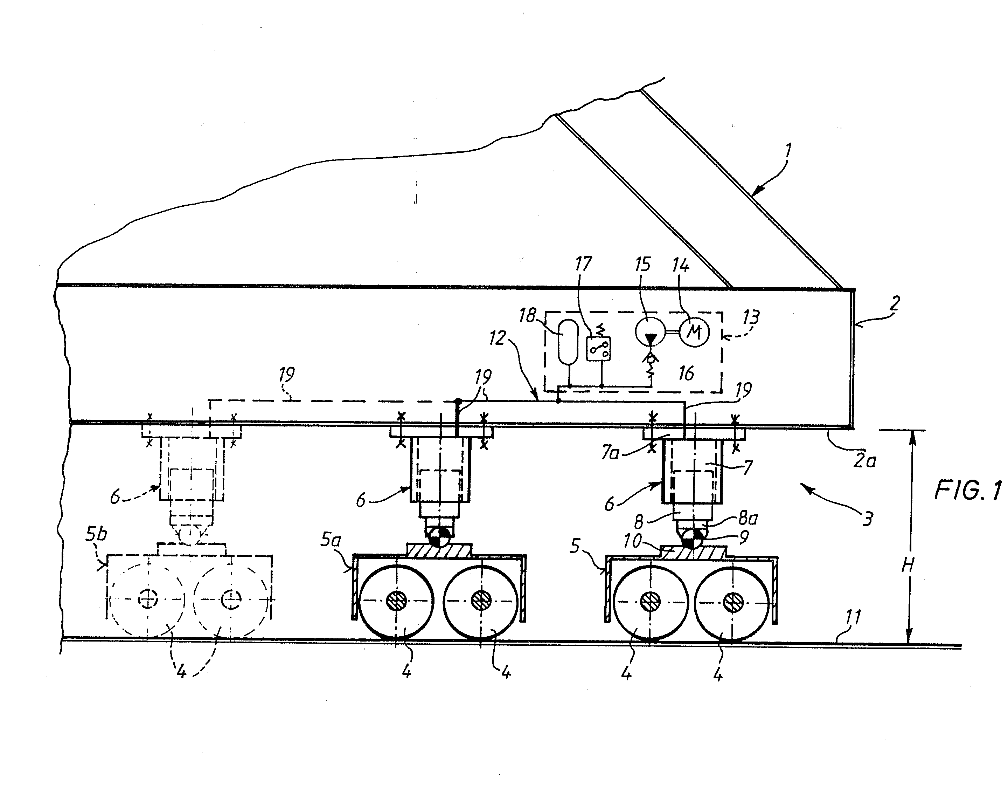

In Fig.1 ist das Fahrgestell bei 1 nur zum Teil angedeutet, und zwar insbesondere mit einem Teil des unteren Gestellrahmens 2 im Bereich eines Stützpunktes 3, der sich beispielsweise an einer Ecke des Gestellrahmens 2 befindet. Es sei gleich an dieser Stelle gesagt, daß das Fahrgestell 1 über seinen Gestellrahmen 2 an mehreren gleichartigen Stützpunkten 3 verfahrbar abgestützt ist.

Am Stützpunkt 3 können je nach Größe und Gewicht des abzustützenden Arbeitsgerätes mehrere Laufräder angeordnet sein. Im veranschaulichten Ausführungsbeispiel gemäß Fig.1 sei angenommen, daß im Stützpunkt 3 eine gerade Anzahl von Laufrädern 4 vorgesehen ist, die jeweils paarweise in einer Laufradschwinge 5, 5a angeordnet sind. Im Beispiel der Fig.1 sei ferner angenommen, daß zwei Laufradpaare im Stützpunkt 3 ausreichend sind, wie in durchgehenden Linien dargestellt ist; gestrichelt ist jedoch ferner ein weiteres Paar von Laufrädern 4 angedeutet, die ebenfalls in einer Laufradschwinge 5b angeordnet sind. Da alle Laufräder 4 über ihre Laufradschwingen 5, 5a, 5b gleichartig ausgebildet und an der Unterseite 2a des Gestellrahmens 2 befestigt sind, genügt es, lediglich die Verbindung zwischen einer Laufradschwinge, z.B. der Schwinge 5, mit dem Gestellrahmen 2 näher zu erläutern.

Als Verbindung zwischen dem Gestellrahmen 2 und jeder Laufradschwinge, z.B. 5, ist eine hydraulisch beaufschlagbare, einstellbare Hubvorrichtung 6 vorgesehen, die im Beispiel der Fig.1 durch eine hydraulische Zylinder-Kolben-Einheit 6 gebildet ist. Diese hydraulische Zylinder-Kolben-Einheit 6 ist in diesem Falle so angeordnet, daß ihr Zylinder 7 mit seinem oberen Ende 7a an der Unterseite 2a des Gestellrahmens 2 befestigt, vorzugsweise - wie schematisch angedeutet - verschraubt ist. Der Kolben 8 dieser

0118608

Zylinder-Kolben-Einheit 6 besitzt eine nach unten ragende Kolbenstange 8a, an deren unterem Ende eine Schwenkverbindungsstelle vorgesehen ist, die durch ein Drehgelenk 9 gebildet ist und die Verbindung zwischen der Zylinder-Kolben-Einheit 6 und einem oberen Ansatz 10 der zugehörigen Laufradschwinge 5 darstellt.

Jede Zusammenordnung von Laufrädern 4, Laufradschwinge 5, 5a, 5b, Drehgelenk 9 und Zylinder-Kolben-Einheit 6 besitzt - wie in Fig.1 deutlich zu erkennen ist - die gleiche Bauhöhe H zwischen der Gestellrahmenunterseite 2a und der Laufebene (Boden oder Laufschienen) 11 für die Laufräder 4. Auf diese Weise spielt die Anzahl der Laufräder bzw. Laufradpaare je Gestellrahmen-Stützpunkt 3 für die Bauhöhe H keine Rolle.

Alle Zylinder-Kolben-Einheiten 6 für die Laufradschwingen 5, 5a, 5b des Stützpunktes 3 sind einer gemeinsamen Hydraulikeinrichtung 12 zugeordnet, die in günstiger Weise - wie veranschaulicht - innerhalb des Gestellrahmens 2 untergebracht sein kann. Diese Hydraulikeinrichtung 12 enthält eine in üblicher Weise aufgebaute Drucksteuervorrichtung 13 mit einer von einem Motor 14 angetriebenen Pumpe 15, einem Rückschlagventil 16, einem Ventil 17 und einem Druckspeicher 18. Diese Drucksteuervorrichtung 13 ist über Leitungen 19 mit allen zum Stützpunkt 3 gehörigen Zylinder-Kolben-Einheiten 6 in der Weise verbunden, daß alle Zylinder-Kolben-Einheiten 6 zunächst einzeln mit Druck beaufschlagt werden können, um vor der eigentlichen Lastaufnahme einen jeweils vorgegebenen Hub einstellen zu können, der erforderlich ist, um beispielsweise Geräteschiefstellungen und Fahrbahnunebenheiten ausgleichen zu können. Erst wenn dies erreicht ist, kann die Last des Stützpunktes 3 über die Hydraulikeinrichtung 12 gleichmäßig über die zugehörigen Zylinder-Kolben-Einheiten 6 auf alle Laufradschwingen 5, 5a (5b) und deren Laufräder 4 verteilt werden. Kleinere Unebenheiten in der Fahrbahn (Laufebene 11) können dabei noch durch die Schwenkbeweglichkeit des Drehgelenks 9 ausgeglichen werden.

Bei der im Beispiel der Fig.1 gewählten paarweisen Zusammenordnung aller Laufräder 4 ergibt sich somit eine einfache und baugleiche Konstruktion für jede Radpaarabstützung, wobei alle Laufradschwingen 5, 5a, 5b des dargestellten Stützpunktes 3 mit Abstand und unabhängig voneinander an der Gestellrahmenunterseite 2a befestigt sind; lediglich die einzelnen Zylinder-Kolben-Einheiten 6 dieses Stützpunktes 3 sind durch ihre gemeinsame Hydraulikeinrichtung 12 im Sinne einer gegebenen, vorzugsweise gleichmäßigen Lastverteilung auf alle Laufräder 4 hydraulisch miteinander verbunden.

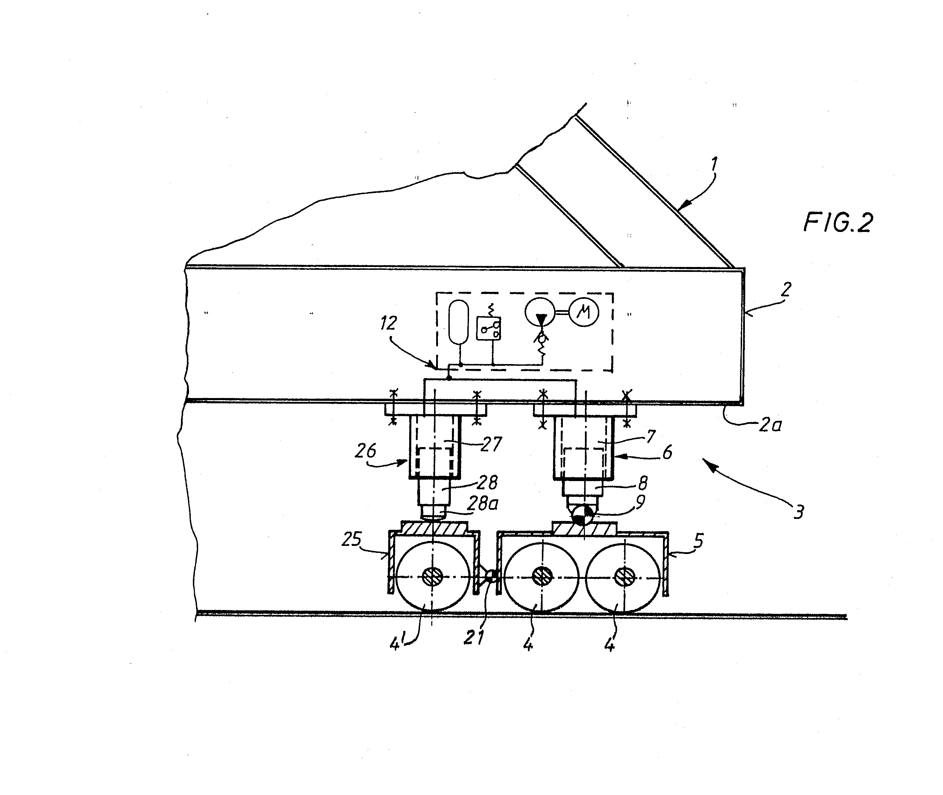

Bei dem in Fig.2 veranschaulichten zweiten Ausführungsbeispiel handelt es sich in erster Linie um eine Abwandlung der anhand Fig.1 erläuterten Teile in Anpassung an eine Ausbildung des Gestellrahmen-Stützpunktes an eine ungerade Anzahl von Laufrädern. Da bei diesem zweiten Ausführungsbeispiel der größte Teil der Fahrgestellteile gleichartig wie beim ersten Ausführungsbeispiel ausgeführt ist und funktioniert, werden der Einfachheit halber gleichartige Fahrgestellteile mit denselben Bezugszeichen wie in Fig.1 versehen, so daß sich deren erneute Beschreibung erübrigt.

In diesem Falle stützt sich das Fahrgestell 1 über seinen Gestellrahmen 2 in jedem Stützpunkt 3 auf drei einander benachbarten Laufrädern 4 bzw. 4' ab. Hiervon sind die beiden Laufräder 4 in einer ersten Laufradschwinge 5 angeordnet, die praktisch gleichartig ausgebildet und über ein Drehgelenk 9 sowie eine Zylinder-Kolben-Einheit 6 mit der Gestellrahmenunterseite 2a verbunden sein kann, wie es anhand Fig.1 erläutert ist. Dagegen ist das dritte Laufrad 4' dieses Stützpunktes 3 allein in einer zweiten Laufradschwinge 25 angeordnet, die einerseits über eine zugehörige Zylinder-Kolben-Einheit 26 mit der Unterseite 2a des Gestellrahmens 2 in Verbindung steht und andererseits durch ein Gelenk 21 mit der ersten Laufradschwinge 5 schwenkbeweglich verbunden ist. Der Aufbau der Zylinder-Kolben-Einheit 26 für die zweite Schwinge 25 kann grundsätzlich gleichartig sein wie der der Zylinder-Kolben-Einheit 6, also mit Zylinder 27, Kolben 28 und nach unten ragender Kolbenstange 28a; um eine gleichmäßige Lastverteilung zwischen der ersten Schwinge 5 mit Zylinder-Kolben-Einheit 6 und der zweiten Schwinge 25 mit Zylinder-Kolben-Einheit 26 erreichen zu können, weist der Zylinder 27 jedoch gegenüber dem Zylinder 7 der Zylinder-Kolben-Einheit 6 nur die halbe Wirkfläche auf. Die hydraulische Beaufschlagung und Einstellung der Zylinder-Kolben-Einheiten 6 und 26 bei diesem zweiten Ausführungsbeispiel geschieht dann wiederum in gleicher Weise mit Hilfe einer gemeinsamen Hydraulikeinrichtung 12, wie es anhand der Fig.1 erläutert worden ist.

Man kann sich leicht vorstellen, daß ein Gestellrahmen-Stützpunkt 3 eine beliebige Anzahl von Laufrädern 4, 4' aufweisen kann, also auch eine beliebige ungerade Zahl von Laufrädern, beispielsweise fünf und mehr Laufräder, wobei dann in zweckmäßiger Weise Zweirad- und Dreirad-Zusammenordnungen gemäß den Fig.1 und 2 in sinnvoller Weise miteinander kombiniert werden können, d.h. es können beispielsweise drei Räder in der anhand Fig.2 geschilderten Weise zusammengeordnet werden, während die übrigen Laufräder paarweise in unabhängig voneinander am Laufrahmen 2 befestigten Laufradschwingen angeordnet werden, wobei jedoch alle Zylinder-Kolben-Einheiten eines Gestellrahmen-Stützpunktes nur eine einzige gemeinsame Hydraulikeinrichtung 12 benötigen.

Betrachtet man ein ganzes Fahrgestell für ein schweres Arbeitsgerät mit einer Anzahl von Gestellrahmen-Stützpunkten, dann besitzt jeder Stützpunkt zweckmäßig seine eigene Hydraulikeinrichtung 12.

Zur Ausbildung und Anordnung der hydraulisch beaufschlagbaren, einstellbaren Hubvorrichtungen für die Laufradschwingen sei noch gesagt, daß die gewählten Gelenkverbindungen nicht nur oder nicht allein zwischen den Laufradschwingen und der entsprechenden Kolbenstange, sondern auch (zusätzlich oder allein) an der Verbindungsstelle zwischen jeder Zylinder-Kolben-Einheit und dem Gestellrahmen vorgesehen sein kann.

Darüber hinaus besteht für die Ausbildung der hydraulisch beaufschlagbaren, einstellbaren Hubvorrichtungen auch die Möglichkeit, anstelle von Zylinder-Kolben-Einheiten andere geeignete Vorrichtungen, insbesondere hydraulisch betätigbare Membranvorrichtungen vorzusehen, die in sich bereits eine Schwenkbeweglichkeit gestatten, so daß in diesem Falle ein gesondertes Drehgelenk an der Hubvorrichtung entfallen könnte.

Obwohl eine gleichmäßige Lastverteilung auf alle Laufräder in der Praxis vorgezogen wird, kann es mitunter doch wünschenswert sein, die Lastverteilungen auf einzelne Räder bzw. Radpaare in vorgegebener Weise zu variieren. In diesem Falle kann dies leicht durch eine entsprechende Änderung und Anpassung der Zylinderwirkflächen von den zugehörigen Zylinder-Kolben-Einheiten erreicht werden.

Für die hydraulischen Einrichtungen an den Gestellrahmen-Stützpunkten besteht ferner die Möglichkeit, elektrische oder andere Überwachungseinrichtungen vorzusehen, um den erforderlichen Hub sowie eventuell Öl- bzw. Druckverluste überwachen und ggf. automatisch ausgleichen zu können.

Dr.-Ing. Dr. jur. VOLKMAR TETZNER

RECHTSANWALT und PATENTANWALT

Van-Gogh-Straße 3
8000 MÜNCHEN 0118608
Telefon: (089) 79 88 03
Telegramme: „Tetznerpatent München"
Telex: 5 212 282 pate d

P 5400

Patentansprüche:

1. Fahrgestell für schwere Arbeitsgeräte, enthaltend einen Gestellrahmen und an mehreren Stützpunkten des Gestellrahmens angeordnete Laufräder, die über Laufradschwingen mit dem Gestellrahmen schwenkbeweglich verbunden sind, dadurch gekennzeichnet, daß die Verbindung zwischen dem Gestellrahmen (2) und jeder Laufradschwinge (5, 5a, 5b; 25) durch eine hydraulisch beaufschlagbare, einstellbare Hubvorrichtung (6; 26) gebildet ist.

2. Fahrgestell nach Anspruch 1, dadurch gekennzeichnet, daß die Hubvorrichtungen (6; 26) für die Laufradschwingen (5, 5a, 5b; 25) jeweils eines Gestellrahmen-Stützpunktes (3) einer gemeinsamen Hydraulikeinrichtung (12) im Sinne einer gegebenen Lastverteilung, vorzugsweise einer gleichmäßigen Lastverteilung, auf alle Laufräder (4; 4') des zugehörigen Stützpunktes (3) zugeordnet sind.

3. Fahrgestell nach Anspruch 2, dadurch gekennzeichnet, daß jede Hydraulikeinrichtung (12) mit einer Drucksteuervorrichtung (13) in der Weise ausgestattet ist, daß alle zugehörigen Hubvorrichtungen (6; 26) vor der Lastaufnahme einzeln auf einen jeweils vorgegebenen Hub einstellbar sind.

4. Fahrgestell nach Anspruch 2, dadurch gekennzeichnet, daß jede Hubvorrichtung durch eine hydraulische Zylinder-Kolben-Einheit (6; 26) gebildet ist, die zumindest an ihrem einen Ende (8a) eine Schwenkverbindungsstelle (9) aufweist.

5. Fahrgestell nach Anspruch 2, dadurch gekennzeichnet, daß jede Hubvorrichtung durch eine hydraulisch betätigbare, schwenkbewegliche Membranvorrichtung gebildet ist.

6. Fahrgestell nach Anspruch 2, wobei an jedem Gestellrahmen-Stützpunkt eine gerade Anzahl Laufräder vorgesehen ist, die jeweils paarweise an einer Laufradschwinge angeordnet sind, dadurch gekennzeichnet, daß alle Laufradschwingen (5, 5a, 5b) eines Stützpunktes (3) mit Abstand und unabhängig voneinander am Gestellrahmen (2) befestigt und lediglich durch ihre gemeinsame Hydraulikeinrichtung (12) hydraulisch miteinander verbunden sind.

7. Fahrgestell nach Anspruch 6, dadurch gekennzeichnet, daß zwischen jeder Laufradschwinge (5, 5a, 5b) und der zugehörigen Hubvorrichtung (6) ein Drehgelenk (9) vorgesehen ist.

8. Fahrgestell nach Anspruch 2, wobei an jedem Gestellrahmen-Stützpunkt eine ungerade Anzahl von Laufrädern vorhanden ist, dadurch gekennzeichnet, daß von drei einander benachbarten Laufrädern (4, 4') zwei Laufräder (4) in einer ersten Laufradschwinge (5) angeordnet und diese erste Laufradschwinge über ein Drehgelenk (9) mit der am Gestellrahmen (2) befestigten Hubvorrichtung (6) verbunden ist, während das dritte Laufrad (4') allein in einer zweiten Laufradschwinge (25) angeordnet ist, die einerseits durch ein Gelenk (21) mit der ersten Laufradschwinge (5) und andererseits über die zugehörige Hubvorrichtung (26) mit dem Gestellrahmen (2) in Verbindung steht.

9. Fahrgestell nach Anspruch 8, dadurch gekennzeichnet, daß bei wenigstens fünf Laufrädern je Gestellrahmen-Stützpunkt die übrigen Laufräder paarweise in unabhängig voneinander am Gestellrahmen befestigten Laufradschwingen angeordnet sind.

0118608

FIG.1

FIG.2

Europäisches
Patentamt

**EUROPÄISCHER RECHERCHENBERICHT**

**0118608**
Nummer der Anmeldung

EP 83 11 2152

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-1 461 002 (M. SCHMIDT) <br> * Ansprüche; Figuren 1-3,10; Seite 1, Spalte 2; Seite 6, Spalte 2, Zeile 28 - Seite 7, Spalte 2, Zeile 33 * <br><br> --- | 1-7 | B 60 G 17/04 <br> B 60 G 5/02 |
| X | GB-A-1 512 377 (A.E. BOLTON) <br><br> * Insgesamt * <br><br> --- | 1-4,6, 7 | |
| X | GB-A-2 029 784 (W.G. COWAN) <br> * Insgesamt * <br><br> --- | 1-5 | |
| X | FR-A-1 331 544 (COMPAGNIE D'INGENIEURS ET TECHNICIENS D'ETUDES) <br> * Insgesamt * <br><br> --- | 1-5 | **RECHERCHIERTE SACHGEBIETE (Int. Cl. ³)** |
| X | US-A-3 903 979 (J. PERROTIN) <br><br> * Figuren 1,2,5; Spalte 4, Zeilen 12-18; Ansprüche 1,8 * <br><br> --- | 1,2,4, 6 | B 60 G <br> B 62 D |
| Y | US-A-3 246 906 (R.F. CAHILL) <br> * Figuren; Spalte 2, Zeilen 13-40; Spalte 4, Zeilen 51-68; Ansprüche * <br><br> --- | 1-3,6 | |
| Y | GB-A-1 276 179 (HITACHI LTD.) <br> * Figuren; Anspruch * <br><br> ----- | 1-4,7 | |

Der vorliegende Recherchenbericht wurde für alle Patentansprüche erstellt.

| Recherchenort <br> DEN HAAG | Abschlußdatum der Recherche <br> 09-07-1984 | Prüfer <br> FRANKS B.G. |
|---|---|---|